# EUROPEAN PATENT APPLICATION

(11) **EP 4 542 286 A1**
(43) Date of publication of application: **23.04.2025**
(21) Application number: 24195880.0
(22) Date of filing: 22.08.2024
(51) Int. Cl.: G02C 5/14, G02C 11/00, H01R 13/62

(54) **AN EYEWEAR SYSTEM**

(30) Priority: 18.10.2023 US 202318489055
(71) Applicant: Pixieray Oy, 02630 Espoo (FI)
(72) Inventor: Yliluoma, Timo, 02630 Espoo (FI); Huittinen, Otto, 02630 Espoo (FI)
(74) Representative: Moosedog Oy

(57) **Abstract**

An aim of the present disclosure is to provide an electronic eyewear system (100). The eyewear system (100) comprises a rechargeable power source (112) housed within a first temple (106), an electronic component (102A-B), and a charging interface (114) located at the first proximal end (106A) of the first temple (106) for recharging the rechargeable power source (112) using a charger (200). The rechargeable power source (112) supplies power to the electronic component (102A-B). A first magnet (120) is disposed in between the first contact (116) and second contact (118) of the charging interface (114).

## Description

### TECHNICAL FIELD

The present disclosure generally relates to an eyewear and particularly to an electronic eyewear. Further, the disclosure provides hinge integrated charging for electronic eyewear.

### BACKGROUND

Electronic eyewear has gained significant popularity due to their functionality of integrating electronic components such as displays, sensors, and communication modules while maintaining a semblance to traditional eyewear. These electronic components necessitate a power source to operate. Generally, electronic eyewear is usually powered by a small battery, which has a limited operation time. Accordingly, a user of the electronic eyewear needs to periodically replace the small battery. To improve user experience of electronic eyewear, rechargeable power source is provided to ensure prolonged usability of the electronic eyewear. The charging interface, which facilitates the transfer of electrical energy from a charging source to the rechargeable power source of the eyewear, is a crucial component of this system. However, existing designs of charging interfaces for electronic eyewear are fraught with several challenges that diminish the overall user experience and safety.

The common placement of the charging interface on existing electronic eyewear often involves a bulky charging port that is arranged on external surface such that the charging interface can significantly detract from the aesthetics of the eyewear. Besides being visually unappealing, these charging ports are prone to exposure of dust and water, leading to increased wear and tear, and potentially shortening the lifespan of the charging interface. Furthermore, the possibility of a connection of the charging interface with a charger while the eyewear is being worn poses a risk of radiations, electric shocks or overheating to the user, thereby, compromising user safety.

In light of the above discussion, there exists a need of an eyewear system that addresses the aforementioned limitations, by offering a discreet, aesthetically pleasing design, enhanced user safety, and a comfortable wearing experience.

### SUMMARY

An aim of the present disclosure is to provide an eyewear system as defined in the appended independent claims to which reference is made to. The eyewear system facilitates placement of charging interface in proximity of a hinge of the eyewear. Such placement of charging interface at the hinge makes it less noticeable when worn (to increase aesthetic appeal), maintaining a sleek and stylish appearance, lead to a better user experience by minimizing obtrusive elements. Moreover, user safety is also catered substantively as the charging is only possible when temples are in folded position. Further, the user is prevented from concurrently wearing and charging eyewear system, thereby enhance user safety. In the open position of temples i.e. user is wearing eyewear, the hinge area experience less wear and tear from other forms of interaction, which helps in preserving the integrity of the charging interface over time. The charging interface located at the hinge also effectively utilizes structural space around hinge. Advantageous features are set out in the appended dependent claims.

Throughout the description and claims of this specification, the words "comprise" and "contain" and variations of the words, for example "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of a left-side view of an eyewear system according to one embodiment of the present disclosure;
FIG. 2 is an illustration of an isometric view of a charger for an eyewear system (such as the eyewear system of FIG. 1) as per one embodiment of the present disclosure; and
FIG. 3 is an illustration demonstrating coupling of a charger (such as the charger of FIG. 2) to an eyewear system (such as the eyewear system of FIG. 1) in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, the present disclosure provides an eyewear system. The eyewear system comprises:
at least one optical element;
a frame employed to hold each optical element;
a first temple and a second temple, wherein the first temple has a first proximal end and a first distal end, the second temple has a second proximal end and a second distal end, wherein the first proximal end and the second proximal end are connected pivotally to respective ones of two opposite ends of the frame;
at least one electrical component associated with at least one of: the at least one optical element, the frame, the second temple, the first temple;
a rechargeable power source housed inside the first temple, wherein the power source is to be employed to supply electricity to the at least one electrical component;
a charging interface having a first contact and a second contact, and wherein the charging interface is positioned at the first proximal end of the first temple, wherein the charging interface enables charging of the rechargeable power source using a charger; and
a first magnet having a south pole and a north pole, arranged at the first proximal end of the first temple, wherein the first magnet lies between the first contact and the second contact, and wherein a longitudinal axis of the first magnet is aligned perpendicularly to a first line that passes through a first centre of the first contact and a second centre of the second contact.

The term "*eyewear system*" as used throughout the present disclosure refers to an arrangement of electrical and/or mechanical components that are worn around eyes of a user of the eyewear system, referred to as "*wearer*" throughout a remainder of the present disclosure. For example, such an eyewear system is employed to correct a vision of the wearer, such as, by enabling appropriate refraction of light towards the eyes of the wearer. Additionally, and optionally, such an eyewear system enables display of information to the eyes of the wearer.

The eyewear system comprises at least one optical element. The term "*optical element"* as used throughout the present disclosure refers to a mechanical or electromechanical component that alters transmission of light from outside the eyewear system towards the eyes of the wearer. Such an optical element comprises a single optical element (such as a lens) having a width equal to or more than a binocular distance of the wearer. Alternatively, the optical element comprises a left optical element (such as a first lens) arranged in travel path of light towards the left eye of the wearer and a right optical element (such as a second lens) arranged in travel path of light towards the right eye of the wearer.

The eyewear system comprises a frame employed to hold each optical element. The term "*frame*" as used throughout the present disclosure relates to a mechanical component of the eyewear system that acts as a base for retaining the at least one optical element around the eyes of the wearer. In one example, the frame is fabricated using cellulose acetate, propionate plastic, nylon-based plastic, polyamide, epoxy resin, carbon fibre, metal, metal alloy and the like. The frame retains the at least one optical element in a corresponding rim disposed above each eye of the wearer. For example, when the optical element comprises the left optical element and the right optical element, the frame comprises a left rim to retain the left optical element and a right rim to retain the right optical element. In such an example, the left rim and the right rim are separated by a bridge that is arranged on nose of the wearer when the optical system is worn by the wearer. Alternatively, when the at least one optical element comprises a single optical element having the width equal to or more than the binocular distance of the wearer, the frame comprises a single rim to retain the optical element such that a width of the rim is respectively equal to or more than the binocular distance of the wearer.

The eyewear system comprises a first temple and a second temple. The term "*temple*" as used throughout the present disclosure relates to an elongate mechanical component that is disposed towards a left end and a right end of the frame. The temples are arranged over ears of the wearer when the eyewear system is worn by the wearer. For ease of description, the term "*first temple*" refers to a temple disposed over the left ear of the wearer and the term "*second temple*" refers to a temple disposed over the right ear of the wearer when the eyewear system is worn by the wearer. It will however be appreciated that the terms "first temple" and "second temple" could be used interchangeably, for example, to respectively refer to the temple disposed over the right ear of the wearer and the left ear of the wearer when the eyewear system is worn by the wearer. The first temple has a first proximal end and a first distal end. Further, the second temple has a second proximal end and a second distal end. The term "*proximal end*" as used throughout the present disclosure in reference to the temple, relates to a front edge of the temple that is connected to the frame. Consequently, when the eyewear system is worn by the wearer, the proximal end of the temple is positioned proximally to the eye of the wearer. Further, the term "*distal end*" as used throughout the present disclosure in reference to the temple, relates to a rear tip of the temple that is positioned on or behind the ear of the wearer. For example, when the first temple refers to the temple disposed over the left ear of the wearer, the first proximal end refers to the front edge of the left temple that is connected to a left side of the frame to enable the eyewear system to be positioned around the eyes of the wearer (such as the left eye of the wearer). Further, the first distal end refers to the rear tip of the left temple that is disposed either on top of the left ear or behind the left ear of the wearer when the eyewear system is worn by the wearer. Moreover, the second proximal end refers to the front edge of the right temple that is connected to a right side of the frame of the eyewear system to enable the eyewear system to be positioned around the eyes of the wearer (such as the right eye of the wearer). The second distal end would refer to the rear tip of the right temple that is disposed either on the right ear or behind the right ear of the wearer when the eyewear system is worn by the wearer.

The first proximal end and the second proximal end are connected pivotally to respective ones of two opposite ends of the frame. For example, the first proximal end is pivotally connected by a first hinge to the left front edge of the frame and the right proximal end is connected by a second hinge to the right front edge of the frame. Such a pivotal connection of the first proximal end and the second proximal end enables the first temple and the second temple to be folded against the frame, thereby, enabling convenient storage of the eyewear system in a compact manner when the eyewear system is not is use. It will be appreciated that such storage of the eyewear system in the compact manner is important for portability of the eyewear system in addition to reducing the risk of damage to the eyewear system when not in use. The pivotal connections act as flexible joints, allowing some degree of movement and therefore, enabling the eyewear system to absorb accidental stresses, such as when pressure is applied to the eyewear system or the eyewear system falls, thereby, reducing chances of breakage. Also, if the temple is damaged, pivotal connection of the temple to the frame enables easy repairing or replacement of the temple without needing to replace the entire frame. Further, the pivotal connection of the first temple and the second temple on the two opposite ends of the frame ensures a symmetrical and balanced design of the eyewear system. Such symmetrical and balanced design provides consistent weight distribution, improving wearability and comfort for the wearer during use of the eyewear system. Further, the pivotal connection of the first temple and the second temple to the frame enable the eyewear system to adapt to different face widths and shapes associated with different wearers, thereby, ensuring secure and comfortable fit for such different wearers. Moreover, pivotal connection of the first temple and the second temple to the frame ensures that the first temple and the second temple apply consistent tension against sides of head of the wearer, thereby, securely retaining the glasses in place without application of excessive and uncomfortable amount of pressure. Further, the first temple and the second temple are unfolded with respect to the frame to enable the eyewear system to be worn by the wearer.

The eyewear system comprises at least one electrical component associated with at least one of: the at least one optical element, the frame, the first temple. The electrical component receives an input, such as supply of electric current, to enable corresponding operation of the at least one optical element, the frame and/or the first temple. For example, the optical element is implemented as a display and the electrical component is implemented as a light-emitting diode (LED) array capable of displaying information to the eyes of the wearer. In another example, when the electrical component is associated with the frame, the electrical component is implemented as one or more light sources and/or one or more light sensors to respectively emit light or receive light. The term "light source" as used throughout the present disclosure relates to an electronic component capable of receiving an instruction to emit a light pulse and correspondingly, emit the light pulse. It will be appreciated that such LEDs is integrated discreetly on the first temple to provide feedback to the wearer without disturbing a field of view of the wearer. The term "light sensor" as used throughout the present disclosure refers to an electronic component capable of receiving emitted or reflected light to enable determination of at least one characteristic associated with the emitted or reflected light. In yet another example, the electrical component is simultaneously associated with more than one of the at least one optical element, the frame and the first temple. For example, the electrical component is implemented as a power source disposed within the first temple such that the power source enables operation of the optical element implemented as the display screen. In another example, the electrical component is implemented as a charging device within the frame, such that the charging device enables charging of the power source disposed within the first temple. The power source further enables operation of the optical element implemented as the display screen.

The system comprises a rechargeable power source housed inside the first temple. The term "power source" as used throughout the present disclosure relates to an electrical device capable of supplying electricity to one or more components of the eyewear system to enable operation of the corresponding components. The power source is rechargeable to allow connection of the power source to an external power supply, such as, an alternating current power supply to enable recharging of the power source for repeated operation of the eyewear system. The power source is to be employed to supply electricity to the at least one electrical component. For example, when the optical element is implemented as the display screen, the power source is implemented as a rechargeable battery that is electrically connected to the display screen to enable operation of the display screen. In such an example, the power source is implemented as a Li-ion battery, NiCd battery, NiMH battery and the like. The integration of the power source within the temple enables fabrication of the eyewear system in a streamlined and unobtrusive design by avoiding a need for external power packs or cords that could be cumbersome for the wearer or aesthetically unpleasing for onlookers. Further, arrangement of the power source in the temple distributes a weight of the eyewear system towards side of the head of the wearer, preventing the eyewear system from becoming front-heavy, slide down the nose or causing discomfort to the wearer over extended usage. It will be appreciated that the first temple that is implemented as the elongate mechanical component, provides a relatively long and narrow space that is ideal for housing elongate battery cells associated with the power source. Such battery cells maximize battery capacity of the power source, thereby, enabling longer usage times of the eyewear system. Further, positioning the power source away from a front of the frame (such as, proximally to the eyes of the wearer) reduces chances of heat generated during charging or discharging of the power source from causing discomfort to sensitive areas such as the eyes or the nose of the wearer. Moreover, arrangement of the power source within the first temple isolates (such as, electrically or thermally) the power source from other sensitive components in the frame or the optical element, thereby, reducing interference and potential of damage from the power source. Also, arrangement of the power source within the first temple enables easier replacement or upgrading of the power source when needed, thereby, enhancing lifespan and adaptability associated with the eyewear system.

The system comprises a charging interface having a first contact and a second contact. The term "charging interface" as used throughout the present disclosure refers to an electrical component of the eyewear system that enables establishing of electrical connection between the rechargeable power source and an external power supply for recharging of the rechargeable power source. Such an electrical connection is established, for example, using a charger that is simultaneously connected to each of the charging interface and the external power supply. The charging interface comprises the first contact and the second contact. The terms "first contact" and "second contact" as used throughout the present disclosure relate to electrical contact points that are arranged such that simultaneous connection of both the first contact and the second contact with the external supply enables completion of electrical circuit for recharging of the rechargeable power source. The first contact and the second contact are disposed to have a same shape, including but not limited to, a cubical shape, a spherical shape, a hemispherical shape, a pyramidal shape and the like. In one example, the first contact and the second contact are arranged parallel on an exterior plane of the first hinge in a vertical direction of the frame (such as, a direction from top of the frame to bottom of the frame when the eyewear system is worn around the eyes of the wearer). For example, the charging interface is positioned at the first hinge connecting the first temple with the frame. The charging interface is exposed when the first temple is closed against the frame and the charging interface is obscured by the first temple when the first temple is opened. It will be appreciated that the first hinge area is mechanical interruption in body of the frame, thereby, decreasing manufacturing complexity for arrangement of the charging interface in addition to making the first contact and second contact less noticeable to the wearer and/or onlookers. Further, the first hinge is obscured from eyesight of the wearer, thereby, making the arrangement of the charging interface less intrusive for the wearer than other areas on the frame while improving overall aesthetic look of the eyewear system. The charging interface is positioned at the first proximal end of the first temple. The first hinge provides required volume for internal wiring to be established between various electrical components of the eyewear system. It will be appreciated that the first hinge will be implemented such that the opening and closing of the first temple against the frame prevents damage to the charging interface such as pressure being applied to the charging interface by the first temple or scratching of the charging interface by an inner surface of the first temple. The charging interface is to be employed to charge the rechargeable power source using a charger. As previously discussed, the charger is connected to recharge the rechargeable power source to enable operation of the at least one electrical component of the eyewear system. Such recharging of the rechargeable power source is caused by simultaneous electrical connection of the charger to each of the chargeable interface and the external power supply, such as a wall-mounted power socket.

The eyewear system comprises a first magnet having a south pole and a north pole, arranged at the first proximal end of the first temple. For example, the first magnet is implemented as a bar magnet that is disposed within the first hinge. The first magnet lies between the first contact and the second contact. For example, when the first contact and the second contact are arranged parallel to each other on the exterior plane of the first hinge in the vertical direction of the frame, the first magnet is disposed through the first hinge between the first contact and the second contact. Further, the first magnet is arranged equidistantly from each of the first contact and the second contact. Moreover, a longitudinal axis of the first magnet is aligned perpendicularly to a first line that passes through a first centre of the first contact and a second centre of the second contact. The term "longitudinal axis of the first magnet" as used throughout the present disclosure relates to an imaginary line connecting north pole of the first magnet to south pole of the first magnet. For example, when the first magnet is implemented as a bar magnet having a cuboidal shape (or a rectangular cross-section), the longitudinal axis of the first magnet refers to an imaginary line parallel to longest side of the bar magnet. The term "centre of the contact" refers to centre of cross-section of the corresponding contact such that the cross-section is associated with the plane on which each contact is disposed. For example, when each of the first contact and the second contact are arranged parallely on the exterior plane of the first hinge in the vertical direction of the frame and each of the first contact point and the second contact point is implemented to have the hemispherical shape, the first centre of the first contact refers to a centre of circular cross-section associated with disposition of the first contact on the exterior plane. Similarly, the second centre of the second contact refers to a centre of circular cross-section associated with disposition of the second contact on the exterior plane. Consequently, the "first line" is an imaginary line that connects the centre of circular cross-section associated with disposition of the first contact on the exterior plane and the centre of circular cross-section associated with disposition of the second contact on the exterior plane. Further, the first magnet is arranged between the first contact and the second contact such that the longitudinal axis of the first magnet is aligned perpendicularly to the vertical direction of the frame. Consequently, the first contact is disposed on the exterior plane of the first hinge in the vertical direction of the frame and the first magnet is disposed beneath the first contact on the exterior plane in a sideways manner such that the longitudinal axis of the first magnet is aligned perpendicularly to the vertical direction of the frame. Further, the second contact is disposed beneath the first magnet on the exterior plane of the first hinge such that the second contact is arranged linearly with respect to the first contact. Consequently, the first line connecting the first centre of the first contact and the second centre of the second contact is aligned parallely to the vertical direction of the frame. The first magnet is disposed at an equidistance from each of the first contact and the second contact to enable generation of a symmetric magnetic field across the charging interface. The systematic magnetic field prevents misalignment issues that may lead to a poor connection of the charger with the eyewear system and possibly inefficient or interrupted charging. The first magnet assists alignment of corresponding contacts of the charger with the first contact and the second contact, thereby, ensuring secure and consistent connection of the charger with precise alignment within a limited volume.

In one embodiment, the charger has a protrusion, which is in contact with an outer surface of the first temple to enable positioning of the charger in respect to the first temple when the first temple and the charger are coupled. The term "protrusion" as used throughout the present disclosure in reference to the charger, relates to an extended portion of body of the charger that is arranged against the outer surface of the first temple when the charger is coupled to the eyewear system. The protrusion enables accurate arrangement of the charger against the first temple. For example, the protrusion can be implemented as an elongate element, a cylindrical element, an L-shaped element and the like. Optionally, the protrusion of the charger can be caused to snap against the first temple when the charger is coupled to the eyewear system to provide tactile feedback to the wearer, such that the tactile feedback is associated with successful connection of the charger with the eyewear system, thereby, making the coupling process more intuitive. Correspondingly, similar tactile feedback can also be provided to the wearer during decoupling of the charger from the eyewear system to inform the wearer of a successful disconnection of the charger from the eyewear system. It will be appreciated that because the charging interface is only exposed when the first temple is folded against the frame, the eyewear system cannot be used by a wearer (such as a child) during charging, thereby, guaranteeing safety of such wearer. For example, folding of the first temple against the frame reduces a risk of potential electrical short-circuiting proximal to skin of the wearer, protecting the wearer from damage associated with such a potential occurrence. Furthermore, charging of the eyewear system during non-usage protects the wearer from exposure to any potential radiation that may be emitted during charging.

In another embodiment, in a closed position, the first temple is folded pivotally, and the charging interface is exposed, thereby allowing for the charger to be coupled to the charging interface. Further, in an open position, the first temple is unfolded pivotally and the charging interface is concealed by a portion of the frame. As previously discussed, the first proximal end of the first temple is connected to the frame by the first hinge such that the first temple can be folded or unfolded with respect to the frame. Further, the first contact and the second contact of the charging interface are positioned at the first proximal end such that when the first temple is folded pivotally by correspondingly modifying the first hinge, the first contact and the second contact are exposed, allowing the charger to be coupled to the eyewear system. Moreover, when the first temple is unfolded pivotally by correspondingly modifying the first hinge, the first contact and the second contact are concealed, thereby, preventing the charger from being coupled to the eyewear system. The arrangement of the charging interface at the first proximal end shelters the charging interface from ambient factors like rain or sweat of the wearer. Further, protection of the charging interface from continuous exposure to external environment reduces chances of damage and wear of the charging interface, thereby, extend an overall lifespan of the eyewear system. Moreover, the first contact and the second contact are discreetly incorporated into the first hinge, thereby, making the eyewear system look like regular eyewear.

In yet another embodiment, the south pole and north pole are located at different sides of the first line. For example, when the first magnet is implemented as the bar magnet, the south pole and the north pole of the bar magnet will coincide with ends of the longitudinal axis of the first magnet. Further, the first magnet is arranged such that the longitudinal axis of the first magnet is aligned perpendicularly to the first line such that the first line passes through a lateral midline of the first magnet (such as, a line connecting a left side of the first magnet with a right side of the first magnet). Thus, the north pole of the first magnet is disposed at a first side of the first line and the south pole is disposed at a second side, opposite to the first side, of the first line. Optionally, the first magnet can be arranged such that that the first line is separated from the lateral midline of the first magnet by a specific gap. It will be appreciated that because the south pole and north pole are located at different sides of the first line, magnetic force of the first magnet is evenly distributed across the first contact and the second contact to enable symmetric magnetic field distribution. However, if one contact of the first contact and the second contact were closer to the first magnet than the other, it might result in an asymmetric magnetic field distribution, causing misalignment or a less secure connection of first contact and second contact with respective contacts of the charger.

In still another embodiment, the at least one electrical component comprises a processor, at least one display and at least one light sensor. The term "processor" as used throughout the present disclosure, relates to an electronic component capable of receiving one or more inputs, processing the one or more inputs to generate one or more outputs and providing the one or more outputs, for example, as instructions to other components of the eyewear system to enable corresponding operation of such other components. The term "display" as used throughout the present disclosure relates to a display device, such as a display screen capable of displaying digital information to the eyes of the wearer. Such a display is implemented to be substantially transparent to enable transmission of ambient light to the eyes of the wearer in addition to displaying of information on the display screen. For example, the display is implemented as an LED display capable of presenting digital elements as information to the wearer. The processor can be connected to each of the display and the light sensor such that the processor controls respective operation of the display and the light sensor. For example, the processor provides a first instruction to the display to provide information to eyes of the wearer. In another example, the processor provides a second instruction to the light sensor to detect light reflected from the eyes of the wearer, such as, to enable determination of a direction of gaze of the wearer. Optionally, the at least one electrical component comprises an image sensor, a microphone, an accelerometer, a gyroscope, a depth sensor and/or a data transmitter.

In a further embodiment, the at least one electrical component comprises at least one light source. Such a light source can be implemented, for example, as an LED, an infrared LED (IR LED) and the like. In one example, the light source comprises multiple LEDs that are implemented as part of a battery status indicator associated with the power source. Further, the light source can significantly enhance the vision of the wearer in low-light conditions, such as, to ease activities such as reading, working, or navigating in a dark environment. Also, the light source can be used to provide feedback or notifications to user for specific event, such as, by causing flashing of the light source when a call or a message is received by the wearer. In such an example, the eyewear system is wirelessly connected to a mobile device (such as a smartphone or a smartwatch) associated with the wearer.

In a still further embodiment, the charger has an L-shaped form. The charger can be implemented to have the L-shaped form such that the protrusion of the charger is disposed perpendicularly to the exterior plane of the first hinge comprising the first contact and the second contact. Further, when the charger is connected to the eyewear system, the protrusion of the charger having the L-shaped form is arranged against the frame, thereby, enabling stable arrangement of the charger and preventing unintentional movement of the charger with respect to the frame during charging of the rechargeable power source. The protrusion may increase durability and longevity of the first hinge by preventing pushing of the charger towards the first hinge. Further, the protrusion protects the first hinge from external force that may be exerted on the charger in when the charger is coupled to the eyewear system by transferring the external force evenly onto the temple, thereby, reducing application of any concentrated pressure on the first hinge.

In a further embodiment, the charger has a third contact and a fourth contact. The third contact and the fourth contact are to be connected to the first contact and the second contact of the charging interface to enable charging of the rechargeable power source. The charger can be implemented to comprise the third contact and the fourth contact such that when the charger is coupled to the eyewear system for recharging the rechargeable power source, the third contact and the fourth contact respectively come in contact with the first contact and the second contact to establish the electrical connection between the external power supply and the rechargeable power source. It will be appreciated that electrical connection of the third contact and the fourth contact with the first contact and the second contact enables completion of electrical circuit from the external power supply to the eyewear system, thereby, enabling recharging of the rechargeable power source.

In a further embodiment, the charger has a second magnet having a magnetic south pole and magnetic north pole. The second magnet lies between the third contact and the fourth contact. Further, a length axis of the second magnet is aligned perpendicularly to a second line that passes through a third centre of the third contact and a fourth centre of the fourth contact. The term "length axis of the second magnet" as used throughout the present disclosure relates to an imaginary line connecting magnetic north pole of the second magnet to magnetic south pole of the second magnet. For example, when the first magnet is implemented as a bar magnet having a cylindrical shape (or a circular cross-section), the length axis of the second magnet refers to an imaginary line parallel to an axis of the bar magnet. Similarly, to the first magnet, the second magnet can also be implemented as a bar magnet such that the second magnet is disposed beneath the third contact and the fourth contact is disposed beneath the second magnet. The second magnet is aligned such that when the charger is placed in front of the exterior surface, the third contact is collinear with the first contact, the second magnet is collinear with the first magnet and the fourth contact is collinear with the second contact. Further, during coupling of the charger with the eyewear system, the magnetic south pole of the second magnet is attracted by magnetic attraction towards the magnetic north pole of the first magnet. Similarly, the magnetic north pole of the second magnet is attracted towards the magnetic south pole of the first magnet. Such an attraction between the poles of the second magnet and the first magnet ensure proper alignment of the third contact and the fourth contact with the first contact and the second contact, respectively, thereby, ensuring quick and accurate coupling of the charger with the eyewear system without necessitating repetitive plugging and/or unplugging. Further, in an event of misalignment of the charger with the eyewear system or presence of foreign objects between the charger and the eyewear system, the magnetic attraction between the first magnet and the second magnet will be comparatively weak, thereby preventing loose coupling of the charger with the eyewear system and reducing risks associated with short-circuiting or other electrical damage to the eyewear system. Moreover, proper magnetic connection between the first magnet and the second magnet enables optimal alignment of charging coils in wireless charging scenarios, thereby, ensuring efficient power transfer and reduced energy losses. The first magnet and the second magnet provide secure yet impermanent coupling between the charger and the eyewear system, thereby, ensuring that the first contact, the second contact, the third contact and the fourth contact maintain electrical connection during necessary operations while enabling easy detachment when required. For example, if the eyewear system or the charger are accidentally pulled away from each other, the magnetic connection ensures easy detachment, thereby, reducing risk of damage to the eyewear system or the charger. Also, the first magnet and the second magnet prevent requirement of physical insertion of one component of the charger into another component of the eyewear system (unlike universal serial bus-based charging), thereby, reducing wear and tear of the first contact, second contact, third contact and fourth contact. Additionally, perpendicular alignment of the longitudinal axis with the fourth line and the length axis with the second line ensures that the first contact, the second contact, the third contact and the fourth contact are unobstructed by the first magnet and the second magnet, respectively, thereby, ensuring uninterrupted and optimized electrical connection between the charger and the eyewear system. Further, positioning of the first magnet and the second magnet between the corresponding pairs of contacts and perpendicular alignment of the respective magnet, ensures efficient use of limited space within the first hinge and the charger, respectively, thereby, allowing compact fabrication of the eyewear system and the charger, respectively.

In a further embodiment, there is also a rechargeable power source housed inside the second temple, wherein the rechargeable power source supplies electricity to the at least one electrical component.In a further embodiment, the first magnet is arranged between the first contact and the second contact such that the longitudinal axis of the first magnet is not aligned perpendicularly to the first line that passes through a first centre of the first contact and a second centre of the second contact. It is possible, for example that the longitudinal axis of the first magnet is aligned in any other angle than 90 degrees in respect to the first line that passes through a first centre of the first contact and a second centre of the second contact.

In summary, the eyewear system (that can be, for example, autofocus eyeglasses) comprises the charging interface having the first contact, the second contact and the first magnet disposed within the first temple of the eyewear system, enabling convenient recharging of the rechargeable power source disposed within the first temple as well as lightweight and compact arrangement of electrical components within the first temple.

### DETAILED DESCRIPTION OF DRAWINGS

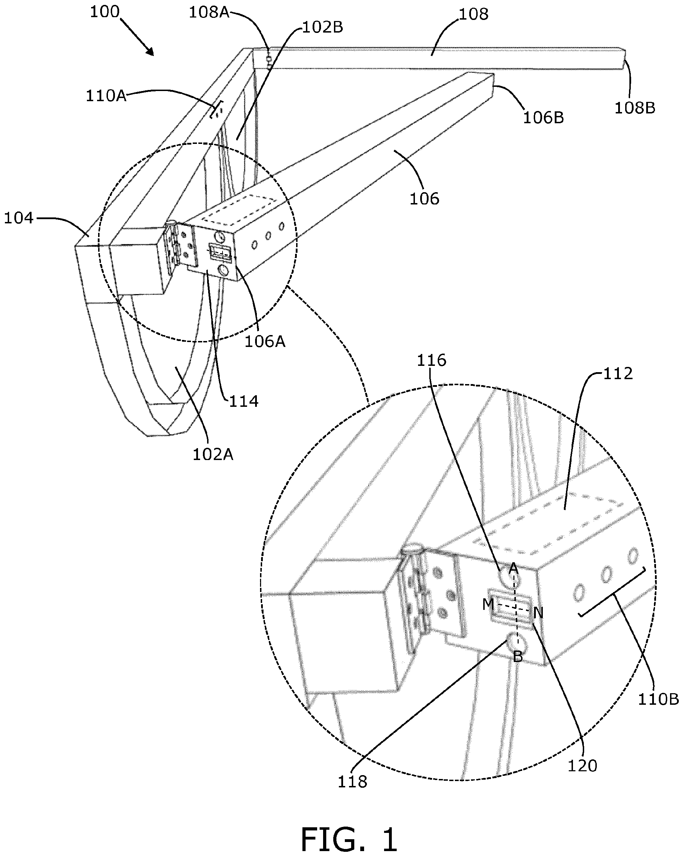

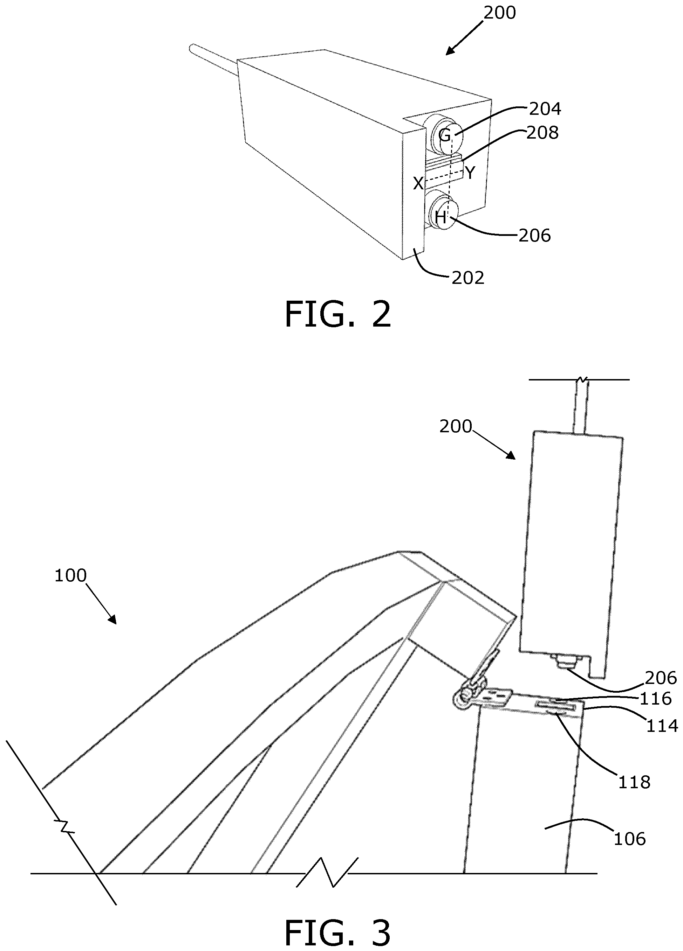

Referring to FIG. 1, there is shown an illustration of a left-side view of an eyewear system **100** according to an embodiment of the present disclosure. The eyewear system **100** comprises at least one optical element **102A-B.** As shown, the at least one optical element **102A-B** is implemented as a left optical element **102A** corresponding to a left eye of a wearer of the eyewear system **100** and a right optical element **102B** corresponding to a right eye of the wearer. The eyewear system 100 comprises a frame **104** employed to hold each optical element **102A-B.** The eyewear system **100** comprises a first temple **106** and a second temple **108.** The first temple **106** has a first proximal end **106A** and a first distal end **106B.** The second temple **108** has a second proximal end **108A** and a second distal end **108B.** The first proximal end **106A** and the second proximal end **108A** connected pivotally to respective ones of two opposite ends of the frame **104.** The eyewear system **100** comprises at least one electrical component **110A-B** associated with at least one of the at least one optical element **102,** the frame **104,** and the first temple **106.** As shown, the electrical component **110A-B** is implemented as multiple light sensors **110A** associated with the frame **104** and multiple light sources **110B** associated with the first temple **106.** The eyewear system **100** comprises a rechargeable power source **112** housed inside the first temple **106.** The rechargeable power source **112** supplies electricity to the at least one electrical component **110A-B.** The eyewear system **100** comprises a charging interface **114** having a first contact **116** and a second contact **118.** The charging interface **114** is positioned at the first proximal end **106A** of the first temple **106.** The charging interface **114** enables charging of the rechargeable power source **112** using a charger (shown in FIG. 2). The eyewear system **100** comprises a first magnet **120** having a south pole and a north pole, arranged at the first proximal end **106A** of the first temple **106.** The first magnet **120** lies between the first contact **116** and the second contact **118.** Further, a longitudinal axis **MN** of the first magnet **120** is aligned perpendicularly to a first line **AB** that passes through a first centre of the first contact **116** and a second centre of the second contact **118.**

Referring to FIG. 2, there is shown an illustration of an isometric view of a charger **200** for an eyewear system (such as the eyewear system **100** of FIG. 1) as per one embodiment of the present disclosure. The charger **200** has a protrusion **202,** which is in contact with an outer surface of the first temple (such as the first temple **106**) to enable positioning of the charger **200** in respect to the first temple when the first temple and the charger **200** are coupled. The charger **200** has an L-shaped form. As shown, the protrusion **202** forms the L-shape with respect to a body of the charger **200.** Further, the charger **200** has a third contact **204** and a fourth contact **206.** The third contact **204** and the fourth contact **206** are to be connected to the first contact (such as the first contact **116**) and the second contact (such as the second contact **118**) of the charging interface (such as the charging interface **114**) to enable charging of the rechargeable power source (such as the rechargeable power source **112**). Moreover, the charger **200** has a second magnet **208** having a magnetic south pole and a magnetic north pole. The second magnet **208** lies between the third contact **204** and the fourth contact **206.** Moreover, a length axis **XY** of the second magnet **208** is aligned perpendicularly to a second line **GH** that passes through a third centre of the third contact **204** and a fourth centre of the fourth contact **206.**

Referring to FIG. 3, there is shown an illustration demonstrating coupling of a charger (such as the charger **200** of FIG. 2) to an eyewear system (such as the eyewear system **100** of FIG. 1) in accordance with an embodiment of the present disclosure. As shown, the first temple **106** is held in closed position. The first temple **106** is folded pivotally, and the charging interface **114** is exposed, thereby allowing for the charger **200** to be coupled to the charging interface **114.** The third contact **204** (shown in FIG. 1) and the fourth contact **206** are to be connected to the first contact **116** and the second contact **118** of the charging interface **114** to enable charging of the rechargeable power source **112** (shown in FIG. 1).

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An eyewear system (100) comprising:
at least one optical element (102A-B);
a frame (104) employed to hold each optical element (102A-B);
a first temple (106) and a second temple (108), wherein the first temple (106) has a first proximal end (106A) and a first distal end (106B), wherein the second temple (108) has a second proximal end (108A) and a second distal end (108B), wherein the first proximal end (106A) and the second proximal end (108A) connected pivotally to respective ones of two opposite ends of the frame (104);
at least one electrical component (110A-B) associated with at least one of: the at least one optical element (102A-B), the frame (104), the second and the first temple (106);
a rechargeable power source (112) housed inside the first temple (106), wherein the rechargeable power source (112) supplies electricity to the at least one electrical component (110A-B);
a charging interface (114) having a first contact (116) and a second contact (118), and wherein the charging interface (114) is positioned at the first proximal end (106A) of the first temple (106), wherein the charging interface (114) enables charging of the rechargeable power source (112) using a charger (200); and
a first magnet (120) having a south pole and a north pole, arranged at the first proximal end (106A) of the first temple (106), wherein the first magnet (120) lies between the first contact (116) and the second contact (118), and wherein a longitudinal axis (MN) of the first magnet (120) is aligned perpendicularly to a first line (AB) that passes through a first centre of the first contact (116) and a second centre of the second contact (118).

2. The eyewear system (100) of claim 1, wherein the charger (200) has a protrusion (202), which is in contact with an outer surface of the first temple (106) to enable positioning of the charger (200) in respect to the first temple when the first temple (106) and the charger (200) are coupled.

3. The eyewear system (100) of any of the preceding claims, wherein in a closed position, the first temple (106) is folded pivotally, and the charging interface (114) is exposed, thereby allowing for the charger (200) to be coupled to the charging interface (114), further wherein in an open position, the first temple (106) is unfolded pivotally and the charging interface (114) is concealed by a portion of the frame (104).

4. The eyewear system (100) of any of the preceding claims, wherein the south pole and the north pole are located at different sides of the first line (AB).

5. The eyewear system (100) of any of the preceding claims, wherein the at least one electrical component (110A-B) comprises a processor, at least one display, and at least one light sensor (110A).

6. The eyewear system (100) of any of the preceding claims, wherein the at least one electrical component (110A-B) comprises at least one light source (110B).

7. The eyewear system (100) of claim 2, wherein the charger (200) has an L-shaped form.

8. The eyewear system (100) of any of the preceding claims, wherein the charger (200) has a third contact (204) and a fourth contact (206), wherein the third contact (204) and the fourth contact (206) are to be connected to the first contact (116) and the second contact (118) of the charging interface (114) to enable charging of the rechargeable power source (112).

9. The eyewear system (100) of any of the preceding claims, wherein the charger (200) has a second magnet (208) having a magnetic south pole and a magnetic north pole, and wherein the second magnet (208) lies between the third contact (204) and the fourth contact (206), and wherein a length axis (XY) of the second magnet (208) is aligned perpendicularly to a second line (GH) that passes through a third centre of the third contact (204) and a fourth centre of the fourth contact (206).
